# EUROPÄISCHE PATENTANMELDUNG

(11) **EP 1 005 971 A1**
(43) Veröffentlichungstag der Anmeldung: **07.06.2000**
(21) Anmeldenummer: 99250243.5
(22) Anmeldetag: 22.07.1999
(51) Int. Cl.: B29C 45/66

(54) **Schliesseinheit für eine Spritzgiessmachine**

(30) Priorität: 02.12.1998 DE 19856480
(71) Anmelder: MANNESMANN Aktiengesellschaft, 40213 Düsseldorf (DE)
(72) Erfinder: Schmidt, Holger Dipl.-Ing., 06567 Bas Frankenhausen (DE); Krosse, Dietmar, Dipl.-Ing., 06571 Wiehe (DE)
(74) Vertreter: Meissner, Peter E., Dipl.-Ing.

(57) **Zusammenfassung**

Die Erfindung betrifft eine Schließeinheit für eine Spritzgießmaschine mit einer feststehenden und einer beweglichen Formspannplatte, die über mindestens zwei Zugstangen miteinander verbunden sind, welche einen als Gewindeumlaufspindel ausgebildeten Abschnitt aufweisen, der mit einer Spindelmutter korrespondiert. Dabei ist die Spritzgießmaschine (10) als Zweiplatten-Spritzgießeinheit (11, 12) ausgebildet,
die einzelnen Zugstangen (21, 22) sind durch mindestens eine der Formspannplatten (11, 12) geführt und auf deren rückwärtigen Seite an die Spindelmutter (25, 26) montiert, die Zugstangen (21, 22) oder die Spindelmutter (25, 26) werden durch einen Motor (31, 33) angetrieben und zwischen den Zugstangen (21, 22) oder den Spindelmuttern (25, 26) und einer der Formspannplatten (11, 12) ist ein einen eigenen Motor (32) besitzendes Formklemmelement (41) vorgesehen.

## Beschreibung

Die Erfindung betrifft eine Schließeinheit für eine Spritzgießmaschine mit einer feststehenden und einer beweglichen Formspannplatte, die über mindestens zwei Zugstangen miteinander verbunden sind, welche einen als Gewindeumlaufspindel ausgebildeten Abschnitt aufweisen, der mit einer Spindelmutter korrespondiert.

Aus EP 0 213 211 ist eine Dreiplatten-Schließeinheit mit mindestens zwei Kugelspindeln bekannt, die von einem Motor mittels Riementrieb angetrieben werden. Der Antrieb dieser Schließeinheit ist so ausgelegt, daß eine hohe Verfahrgeschwindigkeit bei gleichzeitig relativ kleinem Moment während des Öffnens und Schließens der Schließeinheit erreicht wird und eine geringe Verfahrgeschwindigkeit während des Schließkraftaufbaus bei gleichzeitig hohem Moment gewährleistet ist. Hierzu sind die als Kugelspindeln ausgebildeten Säulen relativ groß dimensioniert, da die hohen Schließkräfte über die Kugelspindelmutter über die geplante Lebensdauer aufzunehmen sind. Dadurch vergrößert sich der notwendige Bauraum und letztlich sind durch den Antrieb größere Massen zu bewegen.

Aus EP 0 674 985 ist eine Vierplattenschließeinheit mit von einem Motor angetriebenen Kugelspindel für das axiale Verfahren der beweglichen Formspannplatte bekannt sowie ein zweiter Antrieb zum Erzeugen der Schließkraft mit einem Exzenterwellenhebesystem. Die hierbei bekannte Kugelspindel wird auf Druck belastet, so daß bei ihrer Dimensionierung auch das Knickungsproblem zu berücksichtigen ist.

Ein zweiter Motor treibt bei dieser bekannten Schließeinheit einen Riementrieb einer exzentrisch gelagerten Welle an die über einen Hebel mit einer zweiten beweglichen Platte verbunden ist. An dieser zweiten beweglichen Platte ist die Kugelspindel befestigt, die an ihrem anderen Ende mit der beweglichen Formspannplatte gekoppelt ist.

Die gesamte Schließeinheit hat einen sehr großen Platzbedarf, wodurch die notwendige Aufstellfläche der Maschine erheblich vergrößert wird. Weiterhin besitzt diese bekannte Schließeinheit eine hohe bewegliche Masse, so daß vom Antrieb hohe Massenträgheitsmomente während der Beschleunigung und Abbremsung der beweglichen Bauteile zu überwinden sind.

Die Erfindung hat sich das Ziel gesetzt, eine Schließeinheit für eine Spritzgießmaschine zu schaffen, die die genannten Nachteile vermeidet und bei der mit einfachen konstruktiven Mitteln, wartungsarm und bei Einsatz möglichst wenig Energie ein schnelles Zufahren und ein sicheres Schließen der Form erreicht wird.

Die Erfindung erreicht dieses Ziel durch die kennzeichnenden Merkmale des Anspruchs 1. Die weiteren Ansprüche sind vorteilhafte Weiterbildungen der Erfindung.

Erfindungsgemäß wird zwischen den für den Schnellgang durch einen eigenen Motor angetriebenen, als Spindeln ausgestalteten Zugstangen oder den Spindelmuttern und eine der Formspannplatten ein durch einen eigenen Motor angetriebenes Formklemmelement angeordnet. Dieses Formklemmelement ist in einer vorteilhaften Ausgestaltung als Exzenter ausgebildet. Dieser Exzenter ist in der Öffnung eines Lagerbockes geführt und wird erst betätigt, wenn die bewegliche Formspannplatte im Schnellgang über die als Planetenrollspindel oder als Kugelumlaufspindel ausgestalteten Zugstangen gegen den Anschlag der Form gefahren ist.

Während des Schließkraftaufbaus wird der Spindel-Mutter-Trieb mit der stillstehenden Spindelmutter ausschließlich statisch auf Zug beansprucht. Die ruhende Zug- bzw. Druckbeanspruchung stellt für Spindel eine günstige Beanspruchung dar, da die statisch zulässigen Tragzahlen erheblich über den dynamischen Tragzahlen von Kugelspindeln bzw. Planetenrollspindeln liegen. Auf diese Weise können die Spindeln vergleichsweise klein dimensioniert werden bzw. sie haben eine deutlich höhere Lebensdauer.

Weiterhin bietet die Anordnung der Spindelmutter und der Formklemmelemente einen sehr kurzen Kraftfluß. Eine solche Anordnung garantiert die geringsten Leistungsverluste, einen höheren Wirkungsgrad und ein relativ kleines Systemspiel.

Wird beim Einsatz eines Exzenters eine hohe Kraftübersetzung verwendet, so kommt ein verhältnismäßig kleiner Servomotor zum Einsatz, was wiederum der Energie- wie auch der Kostenersparnis dient. Weiterhin kann durch die Unabhängigkeit von dem Schnellgang der Antrieb des Formklemmelementes den Erfordernissen angepaßt werden, wobei eine definierte Beeinflußung der Schließkraft auch während der Einspritz- und Nachdrückphase möglich ist. Hierbei wird der Antrieb so ausgelegt, daß ein hohes Drehmoment und eine kleine Drehzahl zur Verfügung steht. Mit diesem hochuntersetzten Antrieb ist eine genaue Einstellung der gewünschten Schließkraft auch während der Nachdrückphase möglich.

In einer vorteilhaften Ausgestaltung wird als Antrieb für die als Spindeln ausgebildeten Zugstangen ein hohler Hohlwellengetriebemotor vorgeschlagen. Auf diese Weise wird ein möglichst geringer Platzbedarf für die als Zweiplattenmaschine ausgebildete Spritzgießeinheit erreicht.

Weiterhin wird vorgeschlagen, das Formklemmelement aus mindestens zwei Scheiben aufzubauen, die gegeneinander verdrehbar sind, wobei die sich berührenden Flächen keilförmig ausgestaltet sind. Der Keilwinkel α ist abhängig von dem erforderlichen Hub der Formklemmelemente und der realisierten Anzahl der Keilflächen auf dem Scheibenumfang, wobei der Hub größer ist als das maximale Systemspiel und die Elastizität bei maximaler Schließkraft.

Erfindungsgemäß kommt also eine Zwei-Platten-Schließeinheit zum Einsatz, die eine geringe Maschinenaufstellfläche benötigt und eine Schließeinheit aufweist, die kompakt ist und aus wenigen Funktionsteilen besteht. Hierdurch wird eine höhere Lebensdauer der Bauteile durch eine statisch belastete Spindel erzielt. Hierzu werden zwei Antriebe, vorzugsweise elektrische Antriebe, für den Schnellgang und den Schließkraftaufbau integriert.
Ein Beispiel der Erfindung ist in der beigefügten Zeichnung dargelegt. Dabei zeigen die
- Figur 1: Schematisch den Aufbau einer Schließeinheit
- Figur 2: Ein Formschließelement mit drei Schreiben.
- Figur 3: Ein Formschließelement mit einem Kniehebel.
- Figur 4: Ein Formschließelement mit Hohlwellengetriebemotor.

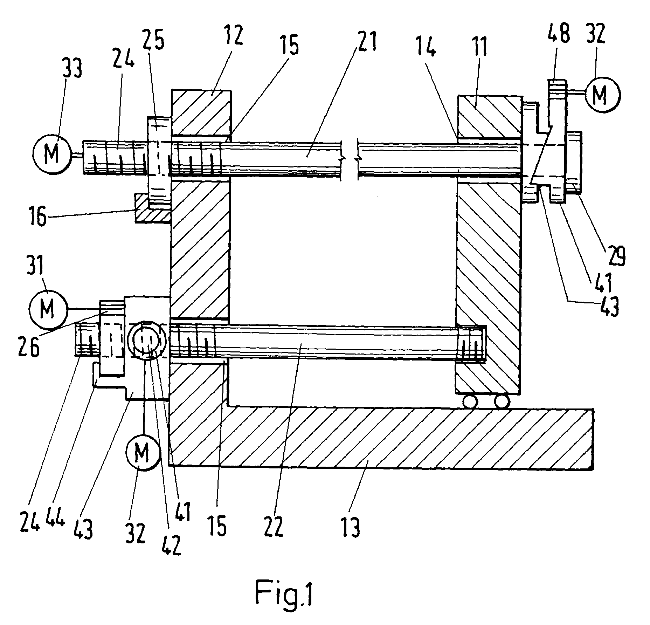

Die Figur 1 zeigt eine Schließeinheit mit einer beweglichen Formspannplatte 11, die auf einem Maschinenbett 13 bewegbar ist und über Zugstangen 21, 22 mit einer feststehenden Formspannplatte 12 verbunden ist. Die Zugstangen 21, 22 sind als Gewindeumlaufspindeln ausgestaltet und korrespondieren jeweils mit einer Spindelmutter 25 bzw. 26.

Im oberen Teil der Figur ist die Spindelmutter 21 durch einen Durchtritt 15 der feststehenden Formspannplatte 12 geführt und an der Außenseite der Formspannplatte 12 ist eine Spindelmutter 25 vorgesehen, die in dem ein Gewinde aufweisenden Abschnitt 24 mit der Zugstange 21 korrespondiert. Die Spindelmutter 25 ist über eine Halterung 16 gehalten.

Am Kopfende der drehbeweglichen Zugstange 21 ist ein Motor 33 zur Drehung der Zugstange vorgesehen.

Im rechten oberen Teil der Figur 1 ist die Zugstange 21 durch einen Durchtritt 14 der beweglichen Formspannplatte 11 geführt und weist kopfendig eine Verdickung 29 auf. Zwischen der Verdickung 29 der Zugstange 21 und der Außenseite der beweglichen Formspannplatte 11 ist ein Formklemmelement 41 vorgesehen, das hier als ein Bauteil ausgestattet ist, das keilförmige Flächen aufweist. Mindestens ein keilförmiges Bauteil 45 des Formklemmelementes 41 ist durch einen Motor 32 betätigbar.

Im rechten unteren Teil ist die Zugstange 22 formschlüssig mit der beweglichen Formspannplatte 11 verbunden.

Im linken Teil der Figur list die Zugstange 22 durch einen Durchtritt 15 der feststehenden Formspannplatte 12 geführt. Die Formspannplatte 12 weist im vorderen Bereich einen Abschnitt 24 auf, der ein Gewinde besitzt, welches mit einer Spindelmutter 26 korrespondiert, welche von einem Motor 31 antreibbar ist.

Zwischen der Spindelmutter 26 und der Außenseite der feststehenden Formspannplatte 12 ist ein als Exzenter 42 ausgestaltetes Formklemmelement 41 vorgesehen, welches mit einem Motor 32 in Verbindung steht.

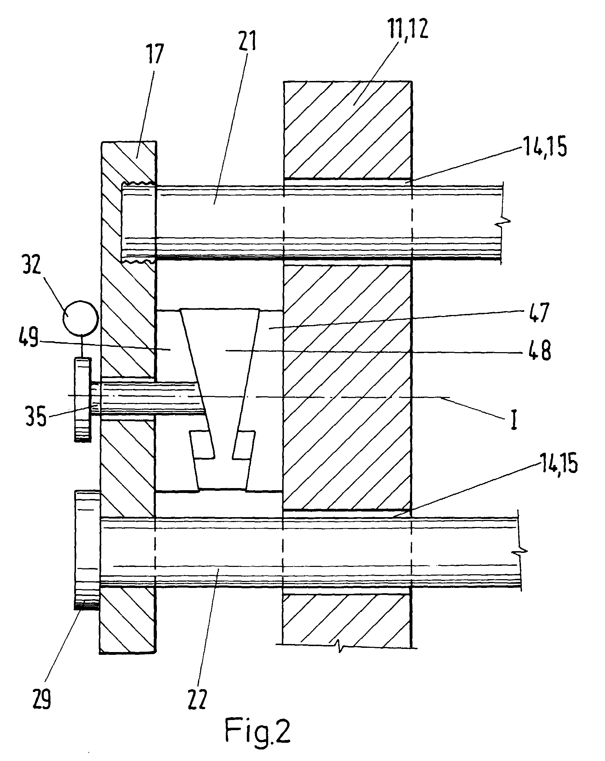

In der Figur 2 ist im Detail eine Formspannplatte 11 oder 12 dargestellt, die Durchtritte 14 bzw. 15 aufweist, durch welche Zugstangen 21 bzw. 22 geführt sind. Kopfwandig an den Zugstangen 21, 22 ist eine Hilfsplatte 17 befestigt, und zwar im oberen Bereich durch ein Gewinde und im unteren Bereich durch eine am Kopfende der Zugstange 22 vorgesehene Verdickung 29.

Zwischen der Hilfsplatte 17 und der Formspannplatte 11 oder 12 sind Scheiben 47 bis 49 angeordnet, wobei die Scheiben 47 und 49 an den ihnen zugewandten Seiten keilförmige Flächen besitzen und zwischen diesen Scheiben eine weitere Scheibe 48 angeordnet ist, welche beidseitig mit keilförmigen Flächen, welche mit den Keilflächen der Scheiben 47 und 49 korrespondieren, angeordnet ist. Die Scheibe 48 ist über eine Antriebswelle 35 mit einem Antrieb 32 verbunden.

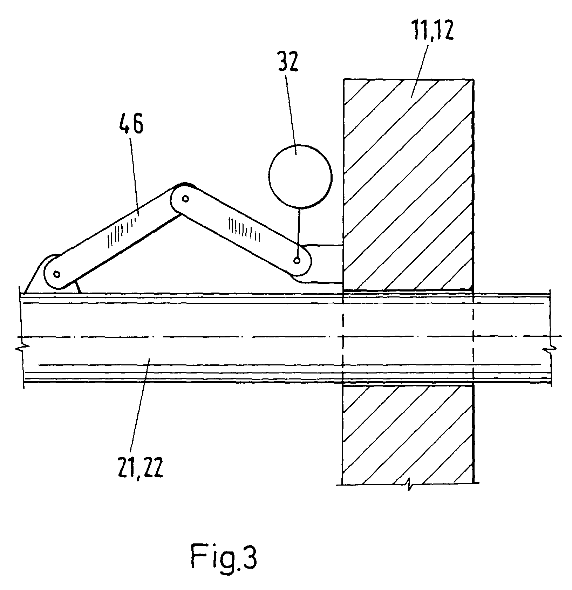

In der Figur 3 ist zwischen der Außenseite der Formspannplatte 11 oder 12 und dem Kopfende der Zugstange 21 oder 22 ein Hebel 46 vorgesehen, der über einen Motor 32 bewegbar ist.

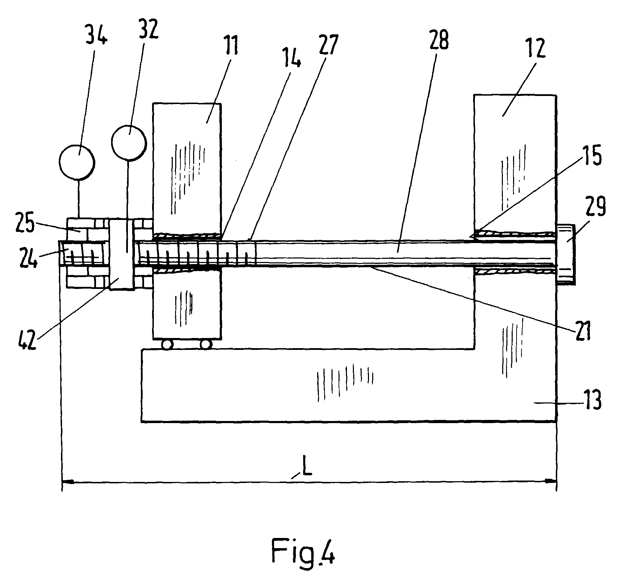

In der Figur 4 ist schematisch eine mit einem Maschinenbett 13 verbundene feststehende Formspannplatte 12 dargestellt, zu der eine bewegliche Formspannplatte 11 zu- oder wegbewegbar ist.

Die Formspannplatten 11 bzw. 12 sind über eine Zugstange 21 miteinander verbunden, wobei diese jeweils durch Durchtritte 14 bzw. 15 der Formspannplatten 11 bzw. 12 geführt sind.

Die Zugstange 21 weist an einem Ende einen Wulst 29 auf und am anderen Ende einen Abschnitt 24, der mit einer Spindelmutter 25 korrespondiert. Die Spindelmutter 25 steht in Wirkverbindung mit einem Hohlwellengetriebemotor 34. Zwischen dem Hohlwellengetriebemotor 34 und der mit diesem integrierten Spindelmutter 25 und der Außenseite der beweglichen Formspannplatte 11 ist ein Exzenter 42 vorgesehen, der über einen Motor 32 antreibbar ist.

### Positionsliste

### Spritzgießmaschine

- 11: Bewegliche Formspannplatte
- 12: Feststehende Formspannplatte
- 13: Maschinenbett
- 14: Durchtritt 11
- 15: Durchtritt 12
- 16: Halterung Spindelmutter
- 17: Hilfsplatte

### Zug

- 21, 22, 23: Zugstangen
- 24: Abschnitt (21-23)
- 25: Spindelmutter 21
- 26: Spindelmutter 22
- 27: Bereich mit Spindel
- 28: Bereich ohne Spindel
- 29: Verdickung

### Antrieb

- 31: Motor Spindelmutter
- 32: Motor Formklemmelement
- 33: Motor Zugstange
- 34: Hohlwellengetriebemotor
- 35: Antriebswelle

### Klemmung

- 41: Formklemmelement
- 42: Exzenter
- 43: Lagerbock
- 44: Führung Spindelmutter
- 45: Bauteil mit Keil
- 46: Kniehebel
- 47: Scheibe 11, 12
- 48: Scheibe zwischen 47 und 49
- 49: Scheibe 17
- I: Hauptachse

## Patentansprüche

1. Schiießeinheit für eine Spritzgießmaschine mit einer feststehenden und einer beweglichen Formspannplatte, die über mindestens zwei Zugstangen miteinander verbunden sind, welche einen als Gewindeumlaufspindel ausgebildeten Abschnitt aufweisen, der mit einer Spindelmutter korrespondiert,
dadurch gekennzeichnet,
daß die Spritzgießmaschine (10) als Zweiplatten-Spritzgießeinheit (11, 12) ausgebildet ist,
daß die einzelnen Zugstangen (21, 22) durch mindestens eine der Formspannplatten (11, 12) geführt und auf deren rückwärtigen Seite an die Spindelmutter (25, 26) montiert sind,
daß die Zugstangen (21, 22) oder die Spindelmutter (25, 26) durch einen Motor (31, 33) angetrieben werden,
daß zwischen den Zugstangen (21, 22) oder den Spindelmuttern (25, 26) und einer der Formspannplatten (11, 12) ein einen eigenen Motor (32) besitzendes Formklemmelement (41) vorgesehen ist.

2. Schließeinheit nach Anspruch 1,
dadurch gekennzeichnet,
daß das Formklemmelement (41) ein Exzenter (42) ist, der mit einem an einer der Formspannplatten (11, 12) befestigten Lagerbock (43) in Verbindung steht.

3. Schließeinheit nach Anspruch 1,
dadurch gekennzeichnet,
daß das Formklemmelement (41) ein Keilflächen aufweisendes Bauteil (45) ist.

4. Schließeinheit nach Anspruch 3,
dadurch gekennzeichnet,
daß das Bauteil (45) aus zwei kreisförmigen Scheiben (47, 49) aufgebaut ist, die gegeneinander durch den Motor (32) verdrehbar sind, wobei die sich berührenden Flächen in Keilflächen aufweisende Segmente aufgeteilt sind.

5. Schließeinheit nach Anspruch 3,
dadurch gekennzeichnet,
daß das Bauteil (45) aus drei kreisförmigen Scheiben (47-49) aufgebaut ist,
daß die erste Scheibe (47) an der Außenseite einer Formspannplatte (11 oder 12) befestigt ist,
daß die zweite Scheibe (49) an der der Formspannplatte (11 oder 12) zugeneigten Seite einer Hilfsplatte (17) befestigt ist, die an mindestens zwei Zugstangen (21, 22) angeschlossen ist,
daß die dritte Scheibe (48) zwischen den Scheiben (47, 49) angeordnet ist und die einzelnen Keilflächen (46) miteinander korrespondieren, und
daß die Scheibe (48) über eine, insbesondere als Hohlweile ausgestaltete Antriebswelle (35) durch einen Motor (32) drehbar ist.

6. Schließeinheit nach Anspruch 1,
dadurch gekennzeichnet,
daß das Formklemmelement (41) als Kniehebel (46) ausgestaltet ist, der sich einenends an einer Formspannplatte (11 oder 12) und anderenends mit einer Zugstange (21, 22) in Verbindung steht.

7. Schließeinheit nach Anspruch 2,
dadurch gekennzeichnet,
daß der Durchmesser der Durchführung (14, 15) durch eine der Formspannplatten (11, 12) um so viel größer als der Durchmesser der Zugstangen (21-23) ausgeführt ist, daß die durch die Exzenterbewegung hervorgerufende Winkelbewegung der Zugstangen (21-23) nicht behindert wird.

8. Schließeinheit nach Anspruch 1,
dadurch gekennzeichnet,
daß die Zugstangen (21, 22) über einen Bereich (27) von 10-30 % seiner Länge (L) als Planetenrollspindeln oder als Kugelumlaufspindeln ausgestaltet sind,
daß das Ende des übrigen Bereichs (28) durch eine der Formspannplatten (11, 12) geführt und fußseitig eine Verdickung (29) besitzt.

9. Schließeinheit nach Anspruch 8,
dadurch gekennzeichnet,
daß der Motor (31) für die als Spindeln ausgebildeten Zugstangen (21, 22) als Hohlwellengetriebemotor (34) mit integrierter Spindelmutter (25, 26) ausgebildet ist.

10. Schließeinheit nach Anspruch 1,
dadurch gekennzeichnet,
daß die Motoren (31-33) für die Zugstangen (21, 22), die Spindelmutter (25, 26) wie auch für die Formklemmelemente (41) elektrisch antreibbar sind.
